# EUROPÄISCHE PATENTSCHRIFT

(11) **EP 2 750 978 B1**
(45) Veröffentlichungstag und Bekanntmachung des Hinweises auf die Patenterteilung: **16.09.2015**
(21) Anmeldenummer: 12730400.4
(22) Anmeldetag: 29.06.2012
(51) Int. Cl.: B65B 61/02, B41J 3/407, B65G 29/00, B65G 47/84, B65G 37/00

(54) **TRANSPORTSYSTEM FÜR PACKMITTEL SOWIE VORRICHTUNG ZUM BEHANDELN VON PACKMITTELN MIT EINEM SOLCHEN TRANSPORTSYSTEM**
TRANSPORTING SYSTEM FOR PACKAGING MEANS, AND APPARATUS FOR HANDLING PACKAGING MEANS USING SUCH A TRANSPORTING SYSTEM
SYSTÈME DE TRANSPORT POUR ÉLÉMENTS D'EMBALLAGE ET DISPOSITIF POUR TRAITER DES ÉLÉMENTS D'EMBALLAGE AU MOYEN D'UN TEL SYSTÈME DE TRANSPORT

(30) Priorität: 02.09.2011 DE 102011112300
(43) Veröffentlichungstag der Anmeldung: 09.07.2014
(73) Patentinhaber: KHS GmbH, 44143 Dortmund (DE)
(72) Erfinder: VARHANIOVSZKI, Gyula, 50259 Pulheim (DE)
(86) Internationale Anmeldenummer: PCT/EP2012/002742
(87) Internationale Veröffentlichungsnummer: WO 2013/029710

(56) Entgegenhaltungen:
- US-A- 3 915 288
- US-A- 4 723 661

## Beschreibung

Die Erfindung bezieht sich auf ein Transportsystem gemäß Oberbegriff Patentanspruch 1 sowie auf eine Vorrichtung zum Behandeln von Packmitteln gemäß Oberbegriff Patentanspruch 14.

Transportsysteme mit den Merkmalen des Oberbegriffs des Patentanspruches 1 sind bekannt (DE 10 2009 043 497 A1). Eine Besonderheit dieser Transportsysteme besteht darin, dass die Packmittel während des gesamten Transportes vom Packmitteleinlauf bis an den Packmittelauslauf an jeweils ein und derselben Halte- und Zentriereinheit (Puck) gehalten sind und die Halte- und Zentriereinheiten die Packmittel erst am Packmittelauslauf freigeben, von dem die Halte- und Zentriereinheiten dann auf einer Puck-Rückführ-Transportstrecke an den Packmitteleinlauf zurückbewegt werden.

Aufgabe der Erfindung ist es, ein Transportsystem der gattungsgemäßen Art aufzuzeigen, welches bei hoher Betriebssicherheit mit reduziertem konstruktivem Aufwand und in kompakter Bauweise realisierbar ist. Zur Lösung dieser Aufgabe ist ein Transportsystem entsprechend dem Patentanspruch 1 ausgebildet. Eine Vorrichtung zum Behandeln von Packmitteln ist Gegenstand des Patentanspruches 14.

Das erfindungsgemäße Transportsystem zeichnet sich dadurch aus, dass zumindest ein Teil der die Packmittel-Transportstrecke bildenden Transportelemente, bevorzugt aber sämtliche Transportelemente der Packmittel-Transportstrecke zugleich die Puck-Rückführ-Transportstrecke bilden bzw. letztere bevorzugt ausschließlich von den Transportelementen der Packmittel-Transportstrecke gebildet ist. Hierdurch können die Anzahl der notwendigen Transportelemente und/oder der notwendigen Transportstrecken für den geschlossenen Puck-Umlauf bzw. für den geschlossenen Transportweg der Pucks und damit auch das Bauvolumen des Transportsystems insgesamt wesentlich reduziert werden.

"Packmittel" sind im Sinne der Erfindung Verpackungen oder Behältnisse, die im Lebensmittelbereich und dabei speziell auch im Getränkebereich üblicherweise verwendet werden, und zwar insbesondere Behälter, wie z. B. Flaschen, Dosen, auch Weichverpackungen, beispielsweise solche hergestellt aus Karton und/oder Kunststofffolie und/oder Metallfolie.

Unter "Puck" ist im Sinne der Erfindung eine Halte-, Zentrier- und Ausrichteinheit für die Packmittel zu verstehen, an der das jeweilige Packmittel gehalten von dem Packmitteleinlauf an den Packmittelauslauf durch eine Packmittel-Transportstrecke des Transportsystems bewegt wird und welches hierbei bevorzugt auch eine gesteuerte Orientierung des jeweiligen Packmittels für dessen Behandlung bewirkt. Der Puck kann dabei eine motorischen Antrieb umfassen, oder selbst Teil eines motorischen Antriebs zum Rotieren des jeweiligen Packmittels um dessen Vertikalachse darstellen.

Die einzelnen Halte- und Zentriereinheiten sind dabei beispielsweise zumindest antriebsmäßig fest mit einem elektrischen Stellantrieb oder zumindest mit einem Funktionselement, beispielsweise mit einem Rotor eines solchen Stellantriebes verbunden, oder aber an den Transportelementen sind mit diesen mitbewegte Stellantriebe vorgesehen, die dann nach der Übergabe der jeweiligen Halte- und Zentriereinheit an diese angekuppelt werden, sodass mit den Stellantrieben dann eine Ausrichtung der Packmittel bzw. der Nulllage und/oder ein Drehen der Packmittel beim Bedrucken um ihre Achse erfolgen kann. Geeignete Inkrementalgeber, Sensoren und Erfassungs- und Datenverarbeitungsvorrichtungen zur Drehwinkelbestimmung bzw. Steuerung sind bekannt.

"Transportmäßig an einander anschließenden Transportelemente oder Transportsterne" bedeutet im Sinne der Erfindung Transportelemente oder Transportsterne, die so ausgebildet und angeordnet sind, dass sie an Übergabebereichen die Pucks von einem benachbarten in einer Transportrichtung vorausgehenden Transportelement aufnehmen, halten und an ein in Transportrichtung folgendes Transportelement weiterleiten.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Insbesondere sind wird eine Halte- und Zentriereinheit offenbart und beansprucht, bei der das Sekundärteil, in dem das Packmittel, die Flasche oder der Behälter gehalten wird, um eine vertikale Achse drehbar und antreibbar an oder in einem Primärteil gelagert ist, und weiterhin motorisch antreibbar ist. Hierbei kann in eine Ausführungsform, der bevorzugten, vorgesehen werden, dass das Sekundärteil den Rotor eines elektromagnetischen Direktantriebes bildet, und so das gesteuerte Ausrichten und/oder Drehen des jeweiligen Packmittels erfolgt. Hierfür wird vorzugsweise das Sekundärteil mit einer Permanentmagnetanordnung versehen ist, die mit einem Stator des elektromagnetischen Direktrehantriebes oder mit einer diesen Stator bildenden Elektromagnetanordnung zusammenwirkt.

Alternativ hierzu kann das Sekundärteil auch einen stufenlos regel- und steuerbarer elektrischer Motor, insbesondere einen Servomotor umfassen oder in einer Hauptkomponenten aus einem solchen Motor besteht. In diesem Fall umfasst das Primärteil in einer Hauptkomponente das Motorgehäuse bzw. besteht im Wesentlichen aus dem Motorgehäuse eines stufenlos regel- und steuerbaren Motors.

Da zu jedem Zeitpunkt die Winkelstellung des Rotors respektive des Packmittels sein muss, ist idealerweise am Sekundärteil, ggf. auch am Primärteil, wenigstens eine Kodierung für die Drehwinkellage vorgesehen, welche mit einem geeigneten Sensor oder Leseeinheit, insbesondere einem oder mehreren Inkremental-Sensoren an der jeweiligen Arbeitsposition zusammenwirkt. Weiterhin kann alternativ oder ergänzende das Primärteil relativ zur jeweiligen Behandlungspositionen in seiner Drehwinkellage immer eindeutig bestimmt oder bestimmbar ausgeführt sein, indem eine formschlüssige Aufnahme, Zentriereinheit oder ein Kupplungselement vorgesehen ist, so dass nur die relative Drehwinkellage des Sekundärteils zum Primärteil durch einen Sensors, Leseeinheit, etc. erfassbar gestaltete sein muss. Die Lage relativ zum Drucksegment bzw. dem Druckkopf kann dann hieraus abgeleitet werden.

Bei der Bedruckung von leeren Packmitteln, insb. PET-, PEN-, PE- oder PP-Leerflaschen, was den Normalfall darstellt, sollte vorteilhafterweise das Packmittel unter leichten Überdruck stehen. Hierzu wird an der Halte- und Zentriereinheit ein Konter- oder Gegenstück zu einem maschinen- oder drucksegmentseitigen Kupplungselement vorgesehen, das insbesondere in der Art einer Schnellkupplung ausgebildet ist. Hierüber kann ein dampf- oder gasförmigen Medium, z.B. Druckluft, durch eine innere Leitung, hier der hohle Innerraum des Pucks, in das Packmittel geleitet werden. Der untere Auslass dieser inneren Leitung bildet im idealerweise ein zentrales Zentrierelement/-konus. Hierfür ist mindestens ein Transport- und Behandlungseinheit, idealerweise die erste, mit einer Dampf- oder Gasquelle verbunden oder umfasst einen geeigneten Kompressor.

Vorteilhafterweise wird das Konterelement der Kupplung als Rückschlagventil ausgebildet oder ein Rückschlagventil ist in der innere Leitung vorgesehen. Hierdurch kann nach dem Vorspannen mit einem dampf- und/oder gasförmigen Medium, z.B. Druckluft, dieser Druck über die gesamte Packmitteltransport- bzw. Druckstrecke im Packmittel erhalten werden.

Die Erfindung wird im Folgenden anhand der Figuren an einem Ausführungsbeispiel näher erläutert. Es zeigen:
- Fig. 1: in schematischer Darstellung eine Draufsicht auf das Transportsystem einer Vorrichtung zum Behandeln von Packmitteln in Form von Flaschen gemäß der Erfindung;
- Fig. 2: das Transportsystem der Figur 1 in vereinfachter perspektivischer Darstellung;
- Fig. 3: in schematischer Darstellung die Umlaufbahn der Pucks des Transportsystems der Figuren 1 und 2.

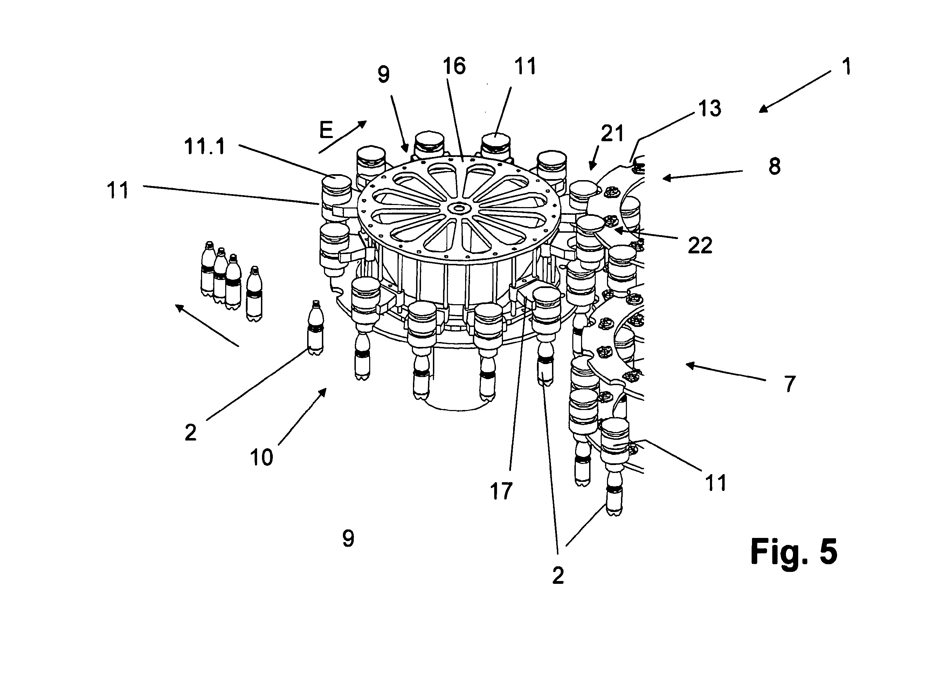

- Fig. 4 und 5: in vergrößerter perspektivischer Darstellung den den Packmitteleinlauf bzw. den Packmittelauslauf bildenden Transportstern.

Das in den Figuren allgemein mit 1 bezeichnete Transportsystem ist Bestandteil einer Vorrichtung zum Behandeln von Packmitteln 2 in Form von Behältern oder Flaschen. Speziell ist das Transportsystem 1 beispielsweise Bestandteil einer Vorrichtung zum Aufbringen wenigstens einer Ausstattung auf jedes Packmittel 2, beispielsweise zum vorzugsweise mehrfarbigen Bedrucken der Packmittel 2.

Die prinzipielle Arbeitsweise des Transportsystems 1 bzw. der dieses Transportsystem aufweisenden Vorrichtung lässt sich dahingehend beschreiben, dass die zu behandelnden Packmittel 2 an einem Packmitteleinlauf 3 zugeführt, dort durch eine nicht dargestellte Einrichtung auf einen erforderlichen Maschinenabstand gebracht und über einen den Packmitteleinlauf 3 bildenden Einlaufstern 4 an eine Packmittel-Transportportstrecke 5 übergeben werden, die bei der dargestellten Ausführungsform von drei rotorartig ausgeführten, umlaufend antreibbaren und transportmäßig an einander anschließenden Transportelementen oder Transportsternen 6, 7 und 8 gebildet ist.

Auf der Packmittel-Transportstrecke 5 erfolgt das Behandeln der Packmitteln 2, die hierfür mit den umlaufenden Transportelementen 6 - 7 an nicht dargestellten Behandlungsstationen vorbei bewegt werden, beispielsweise an Druckstationen oder Druckköpfen zum Aufbringen eines Mehrfarben-Druckes auf jedes Packmittel 2. Nach der Behandlung gelangen die Packmittel 2 über einen Auslaufstern 9 an einen Packmittelauslauf 10, über den die behandelten Packmittel 2 einer weiteren Verwendung und/oder Behandlung zugeführt werden. Die konkrete Transportstrecke 5.1 der Packmittel 2, also Weg der Packmittel 2 entlang der o.g. Transportelemente, ist dabei als gestrichelte Linie angedeutet.

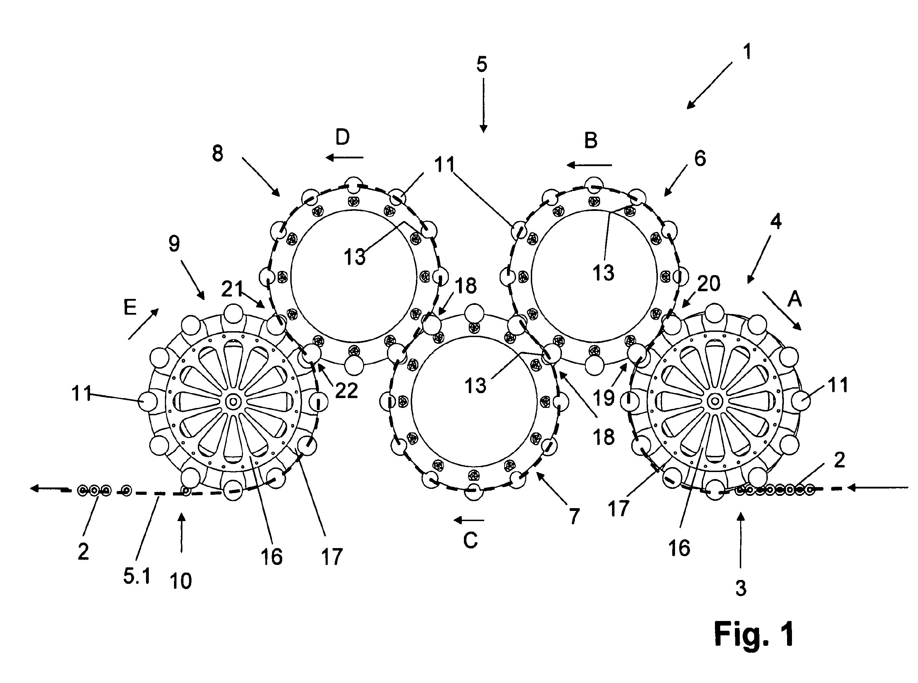

Der Einlaufstern 4, die Transportsterne 6 - 7 sowie der Auslaufstern sind jeweils um eine vertikale Maschinenachse umlaufend antreibbar, und zwar bei der für die Figur 1 gewählten Darstellung der Einlaufstern 4 im Uhrzeigersinn entsprechend dem Pfeil A, der an den Einlaufstern 4 anschließende Transportstern 6 im Gegenuhrzeigersinn entsprechend dem Pfeil B, der an dem Transportstern 6 anschließende Transportstern 7 im Uhrzeigersinn entsprechend dem Pfeil C, der an dem Transportstern 7 anschließende Transportstern 8 im Gegenuhrzeigersinn entsprechend dem Pfeil D und der an den Transportstern 8 anschließende Auslaufstern 9 im Uhrzeigersinn entsprechend dem Pfeil E.

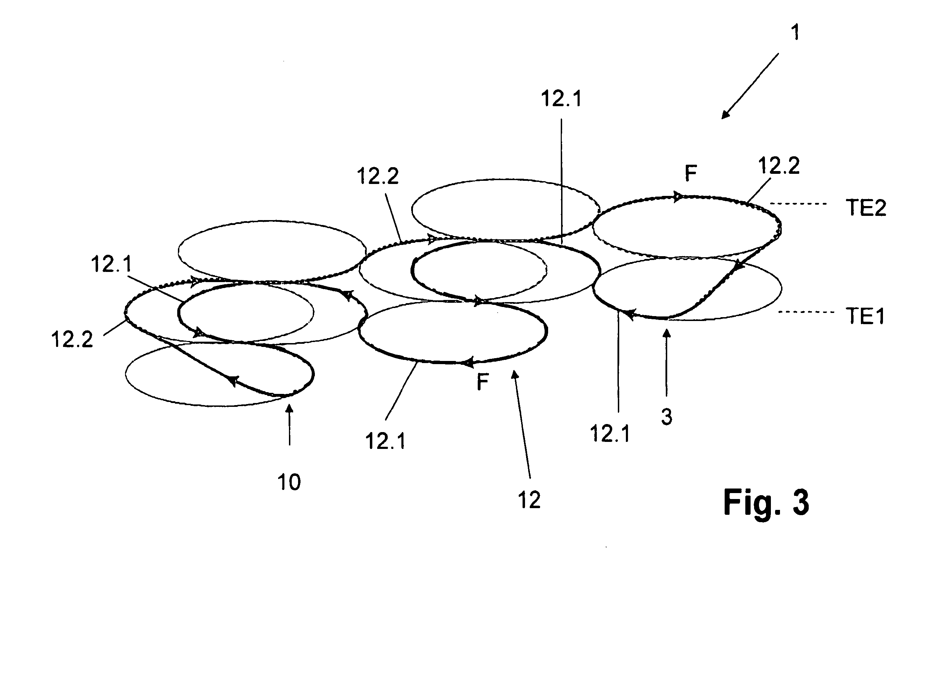

Eine Besonderheit des Transportsystems 1 besteht darin, dass die Packmittel 2 am Packmitteleinlauf 3, d.h. bei der Übergabe an den dortigen Einlaufstern 4 jeweils an ihrer Packmitteloberseite oder Packmittelmündung von einer Packmittelhalte-, Zentrier- und Ausrichteinheit, d.h. von einem Puck 11 aufgenommen und an ein und demselben Puck 11 hängend gehalten durch das gesamte Transportsystem 1 von dem Packmitteleinlauf 3 bis an den Packmittelauslauf 10 bewegt werden. Erst am Packmittelauslauf 10 kommt jedes Packmittel 2 von dem ihm zugeordneten Puck 11 frei. Die leeren Pucks 11, d.h. die Pucks ohne Packmittel 2 werden über das Transportsystem 1 bzw. über eine Puck-Rückführ-Transportstrecke an den Packmitteleinlauf 3 zurückbewegt. Entsprechend der Figur 3 ergibt sich somit ein in sich geschlossener Transportweg 12 für die Pucks 11 (Puck-Umlauf), auf dem sie den dortigen Pfeilen F entsprechend bewegt werden, und zwar bei der dargestellten Ausführungsform in einer unteren, horizontalen oder im Wesentlichen horizontalen Transportebene TE1 entlang der strichpunktiert dargestellten Teilstrecke 12.1 von dem Einlaufstern 4 an den Auslaufstern 9 und in einer oberen, ebenfalls horizontalen Transportebene TE2 auf der die Puck-Rückführ-Transportstrecke bildenden Teilstrecke 12.2 (punktiert dargestellt) vom Auslaufstern 9 zurück an den Einlaufstern 4.

Der gesamte Transportweg 12 verläuft bei der dargestellten Ausführungsform ausschließlich über den Einlaufstern 4, die Transportsterne 6 - 8 und den Auslaufstern 9. Die Teilstrecke 12.1 entspricht dabei dem meanderartig mehrfach umgelenkten Packmittel-Transportweg 5, auf dem die an den Pucks 11 gehaltenen Packmittel 2 vom Packmitteleinlauf 3 an den Packmittelauslauf 10 transportiert werden und auf dem die Behandlung der durch die Pucks 11 ausgerichteten Packmittel 2, beispielsweise durch gesteuertes Drehen oder Schwenken um ihre vertikale Packmittelachse zentrierten und ausgerichteten Packmittel 2 erfolgt. Die Teilstrecke 12.2 ist ebenfalls meanderartig mehrfach umgelenkt, allerdings entgegengesetzt zum Verlauf der Teilstrecke 12.1. Außerdem ist die Teilstrecke 12.2 bei der dargestellten Ausführungsform kürzer als die Teilstrecke 12.1.

Die Transportsterne 6 - 8 sind bei der dargestellten Ausführungsform "zweistöckig" ausgebildet, d.h. sie sind in zwei in vertikaler Richtung gegeneinander versetzten Ebenen, die der unteren Transportebene TE1 bzw. der oberen Transportebene TE2 entsprechen, an ihrem Umfang jeweils mit mehreren Puckaufnahmen 13 ausgebildet, die zur Aufnahme jeweils eines Pucks 11 dienen und in gleichmäßigen Winkelabständen um die Maschinenachse des Transportsternes 6 - 8 verteilt sowie im selben radialen Abstand von dieser Achse vorgesehen sind. Die Puckaufnahmen 13 sind mit Greif- und/oder Haltemitteln ausgestattet, und zwar zur Aufnahme der Pucks 11 von einem in Transportrichtung vorausgehenden Transportelement (Einlaufstern 4, Auslaufstern 9 oder Transportsterne 6 - 8), zum Halten der Pucks 11 und zur Weitergabe der Pucks 11 an ein in Transportrichtung folgendes Transportelement (Einlaufstern 4, Auslaufstern 9 oder Transportsterne 6 - 8).

Der Einlaufstern 4, die Transportsterne 6 - 8 und der Auslaufstern 9 bilden somit Transportelemente zum Bewegen der Pucks 11 auf dem geschlossenen Transportweg 12 sowie auch zum Bewegen der an den Pucks gehaltenen Packmittel 3 auf der Teilstrecke 12.1. Bei der dargestellten Ausführungsform sind die Transportsterne 6 - 8 identisch sowie auch so ausgeführt, dass der radiale Abstand, den Puckaufnahmen 13 der unteren Transportebene TE1 von der Dreh- oder Maschinenachse des jeweiligen Transportsternes 6 - 8 aufweisen gleich dem Abstand ist, den die Puckaufnahmen 13 in der oberen Transportebene TE2 von der Dreh- oder Maschinenachse besitzen. Außerdem befindet sich in vertikaler Richtung über jeder Puckaufnahme 13 der unteren Transportebene TE1 jeweils eine Puckaufnahme 13 der oberen Transportebene TE2.

Entsprechend den Darstellungen der Figuren sind die Transportsterne 6 - 8 beispielsweise ringkäfigartig und/oder speichenradartig ausgebildet, wobei der einfacheren Darstellung wegen von dieser Ausbildung lediglich ein unterer Ring 14 und ein oberer Ring 15 gezeigt sind, an deren Umfang die Puckaufnahmen 13 vorgesehen sind.

Der Einlaufstern 4 und der Auslaufstern 9 sind bei der dargestellten Ausführungsform identisch ausgebildet und bestehen u.a. jeweils aus einem um die vertikale Achse umlaufend antreibbaren Rotor 16 aus mehreren am Umfang des Rotors in gleichmäßigen Winkelabständen und im selben radialen Abstand von der Dreh- oder Maschinenachse angeordneten Aufnahmen 17, die wiederum jeweils mit geeigneten Halte-, Aufnahme- und Übergabeelementen oder -mitteln, beispielsweise in Form von Greifern, für die Pucks 11 versehen sind.

Der Teilungsabstand, den die Aufnahme 17 am Einlaufstern 4 und am Auslaufstern 9 voneinander aufweisen, ist gleich dem Teilungsabstand, den die Puckaufnahmen 13 in den Transportebenen TE1 und TE2 an den Transportsternen 6 - 8 voneinander besitzen, sodass bei synchron angetriebenen Transportelementen (Einlaufstern 4, Auslaufstern 9 und Transportsternen 6 - 8) immer dann, wenn eine Puckaufnahme 13 eines Transportsternes 6 - 8 einen Übergabebereich 18 zwischen zwei benachbarten Transportsternen 6 - 8 erreicht hat, dort eine Puckaufnahme 13 des benachbarten Transportsternes 6 - 8 zur Abgabe und/oder Aufnahme eines Pucks 11 bereitsteht. Weiterhin steht immer dann, wenn zwei Puckaufnahmen 17 des Einlaufsterns 4 die beiden Übergabebereichen 19 und 20 zwischen dem Einlaufstern 4 und dem benachbarten Transportstern 6 oder zwei Puckaufnahmen 17 des Auslaufsternes 9 die beiden Übergabebereiche 21 bzw. 22 zwischen dem Auslaufstern 9 und dem benachbarten Transportstern 8 erreicht haben, an jedem dieser Übergabebereiche jeweils eine Puckaufnahme 13 zur Übergabe oder zur Aufnahme eines Pucks 11 bereit. Die Übergabebereiche 18 sind jeweils paarweise vorgesehen, und zwar ein Übergabebereich 18 in der unteren Transportebene TE1 und ein Übergabebereich in der oberen Transportebene TE2.

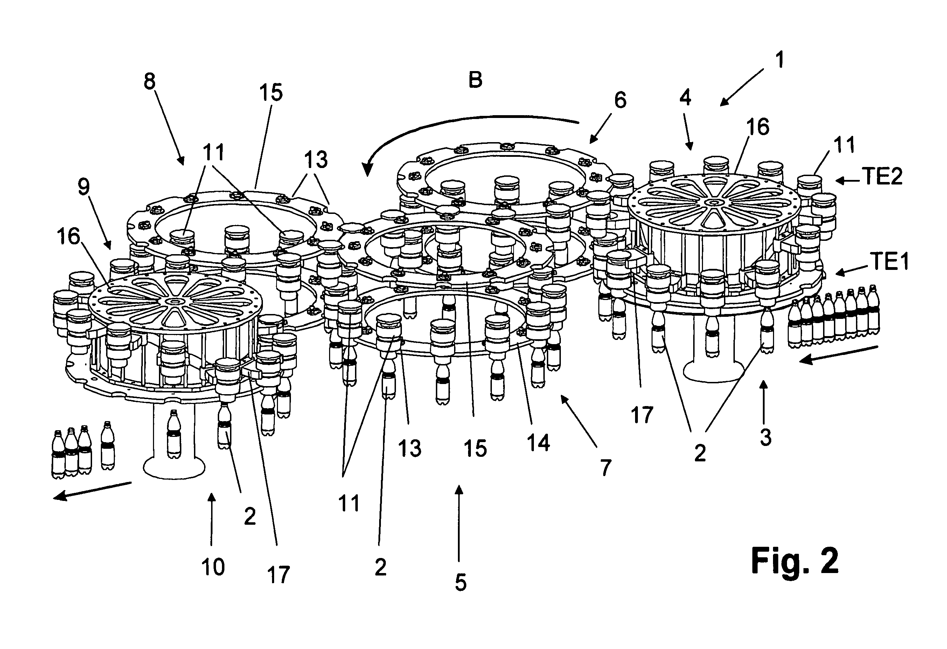

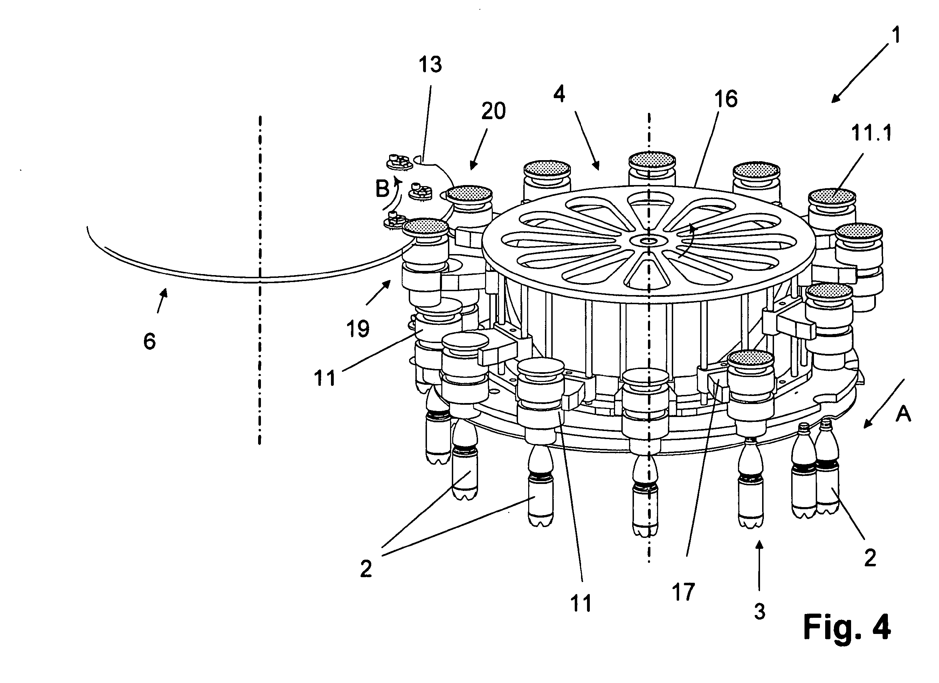

Wie in Figur 2 dargestellt, sind die Puckaufnahmen 17 des Einlaufsternes 4 in vertikaler Richtung gesteuert zwischen den Transportebenen TE1 und TE2 bewegbar, und zwar synchron mit der Drehbewegung des Einlaufsternes 4 und beispielsweise gesteuert durch Steuerkurven derart, dass sich die Aufnahmen 17 auf dem Winkelbereich der Drehbewegung des Einlaufsternes 4 zwischen dem Packmitteleinlauf 3 und dem Übergabebereich 19 auf der unteren Transportebene TE1 bewegen. Die die Packmittel 2 haltenden Pucks 11 werden somit an dem Übergabebereich 19 jeweils an Puckaufnahmen 13 des Transportsternes 6 in der unteren Transportebene TE1 weitergeleitet. Auf dem Winkelbereich der Drehbewegung des Einlaufsternes 4 zwischen dem Übergabebereich 19 und dem Übergabebereich 20 werden die Puckaufnahmen 17 in die obere Transportebene TE2 angehoben, sodass sie die über die Puckaufnahmen 13 der oberen Transportebene TE2 des Transportsternes 6 zurückgeführten Pucks 11 am Übergabebereich 20 aufnehmen können. Figur 4 zeigt im Detail, wie im Anschluss daran die Puckaufnahmen 17 im Winkelbereich der Drehbewegung des Einlaufsternes 4 zwischen dem Übergabebereich 20 und dem Packmitteleinlauf 3 wieder auf die untere Transportebene TE1 abgesenkt werden, wobei die packmittelfreien bzw. leeren Pucks 11.1 zur Verdeutlichung an der Oberseite punktiert bzw. gegraut dargestellt sind.

Die Puckaufnahmen 17 des Auslaufsterns 9 werden ebenfalls gesteuert und synchron mit der Drehbewegung dieses Sterns zwischen der unteren Transportebene TE1 und der oberen Transportebene TE2 bewegt, und zwar derart, dass sie sich auf dem Winkelbereich der Drehbewegung des Auslaufsterns 9 zwischen dem Übergabebereich 22 und dem Packmittelauslauf 10 auf der unteren Transportebene TE1 bewegen, und zwar zur Aufnahme der Pucks 11 mit den Packmitteln 2 vom benachbarten Transportstern 8 und zur Weiterleitung an den Packmittelauslauf 10 auf der unteren Transportebene TE1. Im Winkelbereich der Drehbewegung des Auslaufsterns 9 zwischen dem Packmittelauslauf 10 und dem Übergabebereich 21 werden die Puckaufnahmen 17 in die obere Transportebene TE2 angehoben, und zwar zur Übergabe der Pucks 11 an die Puckaufnahmen 13 des Transportsternes 8 in der Transportebene TE2. Im Winkelbereich der Drehbewegung des Auslaufsterns 9 zwischen dem Übergabebereich 21 und dem Übergabebereich 22 werden die Puckaufnahmen 17 wieder auf die untere Transportebene TE1 abgesenkt.

Wie insbesondere auch der Figur 1 zu entnehmen ist, sind die Übergabebereiche 18 - 22 so angeordnet, dass jeweils der größere Winkelbereich der Drehbewegung der Transportsterne 6 - 8 den in der unteren Transportebene TE1 verlaufenden Teil 12.1 des Transportweges 12 bildet, auf dem auch die Behandlung der Packmittel 2 erfolgt. Bei der dargestellten Ausführungsform erfolgt weiterhin am Einlaufstern 4 das Anheben der Puckaufnahmen 17 von der unteren Transportebene TE1 auf die obere Transportebene TE2 in dem kurzen, einem Teilungsabstand zweier Puckaufnahmen 17 entsprechenden Winkelbereich und das Absenken der Puckaufnahmen 17 auf die Transportebene TE1 auf einem relativ großen, einem mehrfachen Teilungsabstand der Puckaufnahmen 17 entsprechenden Winkelbereich der Drehbewegung des Einlaufsternes 4.

Am Auslaufstern 9 erfolgt in umgekehrter Weise das Absenken der Puckaufnahmen 17 auf die Transportebene TE1 auf dem kleinen, einem Teilungsabstand der Puckaufnahmen 17 entsprechenden Winkelbereich und das Anheben der Puckaufnahmen 17 auf dem relativ großen, einem mehrfachen Teilungsabstand der Puckaufnahmen 17 entsprechenden Winkelbereich der Drehbewegung.

Da die Pucks 11 mit den Packmitteln 2 in der Transportebene TE1 bewegt werden, können der Abstand zwischen den Transportebenen TE1 und TE2 und dabei insbesondere auch der Bewegungshub der Puckaufnahmen 17 zwischen diesen Transportebenen klein gehalten werden, was für den Bewegungshub der Puckaufnahmen 17 auf dem kurzen Winkelbereich zwischen den Übergabebereichen 19 und 20 bzw. 21 und 22 zumindest förderlich ist.

Die Erfindung wurde voranstehend an einem Ausführungsbeispiel beschrieben. Es versteht sich, dass Änderungen sowie Abwandlungen möglich sind, ohne dass der der Erfindung zugrundeliegende Erfindungsgedanke verlassen wird.

### Bezugszeichenliste

- 1: Transportsystem
- 2: Packmittel
- 3: Packmitteleinlauf
- 4: Einlaufstern
- 5: Transportstrecke
- 5.1: Transportstrecke der Packmittel
- 6 - 8: umlaufend antreibbares Transportelement oder Transportstern
- 9: Auslaufstern
- 10: Packmittelauslauf
- 11: Puck
- 12: Transportweg
- 12.1, 12.2: Teillänge des Transportweges 12
- 13: Puckaufnahme
- 14, 15: Ring
- 16: Rotor
- 17: Puckaufnahme
- 18 - 22: Übergabebereich
- A: Drehrichtung des Einlaufsterns 4
- B - D: Drehrichtung der Transportsterne 6 - 8
- E: Drehrichtung des Auslaufsterns 9

## Patentansprüche

1. Transportsystem zum Transportieren von Packmitteln (2) von einem Packmitteleinlauf (3) an einem Packmittelauslauf (10), mit mehreren umlaufend antreibbaren Transportelementen (4, 6 - 8, 9), die in einer Transportrichtung der Packmittel (2) aneinander anschließen und eine Packmittel-Transportstrecke (5) zwischen dem Packmitteleinlauf (3) und dem Packmittelauslauf (10) bilden, wobei die Packmittel-Transportstrecke (5) eine Teillänge eines in sich geschlossenen Transportweges (12) für eine Vielzahl von Packmittel-Halte- und Zentriereinheiten bzw. Pucks (11) ist, die für ein Fassen jeweils eines Packmittels (2) am Packmitteleinlauf (3) und für ein Mitführen des jeweiligen Packmittels (2) entlang der Packmittel-Transportstrecke (5) bis an den Packmittelauslauf (10) ausgebildet sind, sowie mit einer eine weitere Teillänge (12.2) des Transportweges (12) bildenden Puck-Rückführ-Transportstrecke zum Rückführen der Pucks (11) nach Freigabe des jeweiligen Packmittels (2) vom Packmittelauslauf (10) an den Packmitteleinlauf (1), **dadurch gekennzeichnet, dass**
die die Packmittel-Transportstrecke (5) bildende Teillänge (12.1) des Puck-Transportweges (12) und die die Puck-Rückführ-Transportstrecke bildende Teillänge (12.2) des Puck-Transportweges (12) in unterschiedlichen, in vertikaler Richtung gegeneinander versetzten Transportebenen (TE1, TE2) vorgesehen sind, und dass die Packmittel-Transportstrecke (5) und die Puck-Rückführ-Transportstrecke von gemeinsamen Transportelementen (4, 6 - 8, 9) gebildet sind.

2. Transportsystem nach Anspruch 1, **dadurch gekennzeichnet, dass** die Packmittel-Transportstrecke (5) und die Puck-Rückführ-Transportstrecke ausschließlich von gemeinsamen Transportelementen (4, 6 - 8, 9) gebildet sind.

3. Transportsystem nach Anspruch 1 oder 2, **dadurch gekennzeichnet, dass** die die Packmitte-Transportstrecke (5) bildenden Teillänge des Puck-Transportweges (12) unterhalb der die Puck-Rückführ-Transportstrecke bildenden Teillänge (12.2) oder in der unteren Transportebene TE1 verläuft.

4. Transportsystem nach einem der vorhergehenden Ansprüche, **dadurch gekennzeichnet, dass** die Transportelemente (4, 6 - 8, 9) Puckaufnahmen (13, 17) mit Mitteln zur Aufnahme, zum Halten sowie zur Weitergabe der Pucks (11) von und an benachbarte Transportelemente (4, 6 - 8, 9) aufweisen.

5. Transportsystem nach einem der vorhergehenden Ansprüche, **gekennzeichnet durch** ein erstes Transportelement (4) im Bereich des Packmitteleinlaufs zum Rückführen der Pucks (1) aus der der Puck-Rückführ-Transportstrecke entsprechenden Transportebene (TE2) in die der Packmittel-Transportstrecke (5) entsprechenden Transportebene (TE1) sowie **durch** ein zweiten Transportelement (9) am Packmittelauslauf (10) zum Überführen der Pucks (11) aus der der Packmittel-Transportstrecke entsprechenden Transportebene (TE1) in die der Puck-Rückführ-Transportstrecke entsprechende Transportebene (TE2).

6. Transportsystem nach Anspruch 5, **dadurch gekennzeichnet, dass** zwischen dem ersten und zweiten Transportelement (4, 9) wenigstens ein drittes Transportelement (6 - 8), bevorzugt wenigstens zwei dritte Transportelemente (6 - 8) vorgesehen sind.

7. Transportsystem nach Anspruch 5 oder 6, **dadurch gekennzeichnet, dass** das erste am Packmitteleinlauf (3) vorgesehene und/oder zweite am Packmittelauslauf (10) vorgesehene Transportelement als Einlaufstern (4, 9) mit mehrere Puckaufnahmen (17) ausgebildet ist, die in einem Teilungsabstand am Umfang eines um eine vertikale Maschinenachse umlaufend antreibbaren Rotors (16) vorgesehenen und synchron mit der Drehbewegung des Rotors (16) parallel zur Maschinenachse zwischen wenigstens einer unteren und einer oberen Transportebene (TE1, TE2) gesteuert bewegbar sind.

8. Transportsystem nach einem der Ansprüche 6 oder 7, **dadurch gekennzeichnet, dass** das wenigstens ein dritte zwischen dem ersten und dem zweiten Transportelement (4, 9) angeordnete Transportelement (6 - 8) ein um eine vertikale Maschinenachse umlaufend antreibbares Transportelement, beispielsweise in Form eines Transportsterns ist, und dass das dritte Transportelement (6 - 8) zumindest in den wenigstens zwei Transportebenen (TE1, TE2) um seine Maschinenachse in gleichmäßigen Winkelabständen verteilt bzw. in einem gleichen Teilungsabstand die Puckaufnahmen (13) aufweist.

9. Transportsystem nach einem der vorhergehenden Ansprüche, **dadurch gekennzeichnet, dass** zwischen dem Packmitteleinlauf (3) und Packmittelauslauf (10) oder dem ersten und dem dritten Transportelement (4, 6) und/oder zwischen dem zweiten und dem dritten Transportelement (9, 8) jeweils zwei in Umlaufrichtung des ersten und zweiten Transportelementes (4, 9) aufeinander folgende Übergabebereiche (19, 20; 21, 22) gebildet sind, und zwar ein Übergabebereich (19, 22) in der einen, beispielsweise unteren Transportebene (TE1) und ein Übergabebereich (20, 21) in der anderen, beispielsweise oberen Transportebene (TE2).

10. Transportsystem nach einem der vorhergehenden Ansprüche, **gekennzeichnet durch** Steuer- und Hubmittel des ersten und zweiten Transportelementes (4, 9) für das Bewegen der Puckaufnahmen (17) zwischen den Transportebenen (TE1, TE2).

11. Transportsystem nach einem der vorhergehenden Ansprüche, **dadurch gekennzeichnet, dass** die Puckaufnahmen (17) des ersten und des zweiten Transportelementes (4, 9) sowie die Puckaufnahmen (13) des wenigstens einen dritten Transportelementes (6 - 8) jeweils den selben Teilungsabstand aufweisen.

12. Transportsystem nach einem der vorhergehenden Ansprüche, **dadurch gekennzeichnet, dass** die Puckaufnahmen (13) des wenigstens einen dritten Transportelementes (6 - 8) in der einen Transportebene (TE1) Bestandteil der dort verlaufenden Teillänge (12.1) des Packmittel-Transportweges (5) und die Puckaufnahmen (13) in der anderen Transportebene (TE2) Bestandteil der dort verlaufenen Teillänge (12.2) des Pucktransportweges (12) sind.

13. Transportsystem nach einem der vorhergehenden Ansprüche, **dadurch gekennzeichnet, dass** es Bestandteil einer Vorrichtung zum Behandeln der Packmittel (2) ist, und zwar mit wenigstens einer zwischen dem Packmitteleinlauf (3) und Packmittelauslauf (10) an der Packmittel-Transportstrecke (5) vorgesehenen Behandlungsstation, beispielsweise in Form wenigstens einer die Packmittel (2) mit einer Ausstattung, beispielsweise mit einem Aufdruck versehenden Behandlungsstation.

14. Vorrichtung zum Behandeln von Packmitteln, insbesondere zum Ausstatten und/oder Bedrucken von Packmitteln (2), mit einem die Packmittel (2) von einem Packmitteleinlauf (3) an einem Packmittelauslauf (10) entlang einer Packmittel-Transportstrecke (5) transportierenden Transportsystem (1), wobei an der Transportstrecke (5) Behandlungsstationen, beispielsweise Druckstationen vorgesehen sind, **dadurch gekennzeichnet, dass** das Transportsystem (1) nach einem der vorhergehenden Ansprüche ausgebildet ist.

## Claims

1. Transporting system for transporting packaging media (2) from a packaging-media inlet (3) to a packaging-media outlet (10), having a plurality of transporting elements (4, 6-8, 9) which can be driven to rotate, succeed one another in a transporting direction of the packaging media (2) and form a packaging media transporting route (5) between the packaging-media inlet (3) and the packaging-media outlet (10), whereby the packaging media transporting route (5) is a partial length of a self-contained transport path (12) for a plurality of packaging media holding and centering units or pucks (11) which are each configured for holding a packaging medium (2) at the packaging-media inlet (3) and for conveying the respective packaging medium (2) along the packaging media transporting route (5) to the packaging-media outlet (10), and having a puck return transporting route forming a further partial length (12.2) of the transport path (12) for returning the pucks (11) after releasing the respective packaging medium (2) from the packaging-media outlet (10) to the packaging-media inlet (1), **characterised in that** the partial length (12.1) of the puck transport path (12) forming the packaging media transporting route (5) and the partial length (12.2) of the puck transport path (12) forming the puck return transporting route are provided in different transport levels (TE1, TE2) that are vertically offset relative to one another, and **in that** the packaging media transporting route (5) and the puck return transporting route are formed by common transporting elements (4, 6 - 8, 9).

2. The transporting system of claim 1, wherein the packaging media transporting route (5) and the puck return transporting route are formed exclusively by common transporting elements (4, 6 - 8, 9).

3. The transporting system of claim 1 or 2, wherein the partial length of the puck transport path (12) forming the packaging media transporting route (5) runs beneath the partial length (12.2) forming the puck return transporting route or in the lower transport level TE1.

4. The transporting system of any one of the preceding claims wherein the transporting elements (4, 6 - 8, 9) comprise puck receptacles (13, 17) which have means for receiving, holding and transferring the pucks (11) from and to adjacent transporting elements (4, 6 - 8, 9).

5. The transporting system of any one of the preceding claims **characterised by** a first transporting element (4) in the region of the packaging media inlet for returning the pucks (11) from the transport level (TE2) corresponding to the puck return transporting route to the transport level (TE1) corresponding to the packaging media transporting route (5), and by a second transporting element (9) at the packaging media outlet (10) for transferring the pucks (11) from the transport level (TE1) corresponding to the packaging media transporting route to the transport level (TE2) corresponding to the puck return transporting route.

6. The transporting system of claim 5, wherein at least one third transporting element (6-8), preferably at least two third transporting elements (6 - 8), are provided between the first and second transporting element (4, 9).

7. The transporting system of claim 5 or 6, wherein the first transporting element provided at the packaging media inlet (3) and/or second transporting element provided at the packaging media outlet (10) is configured as an inlet star (4, 9) having a plurality of puck receptacles (17) which are provided at a pitch distance about the periphery of a rotor (16) which can be driven to rotate about a vertical machine axis and controlled to move synchronously with the rotary motion of the rotors (16) parallel to the machine axis between at least one lower and one upper transport level (TE1, TE2).

8. The transporting system of either of claims 6 or 7, wherein the at least one third transporting element (6 - 8) arranged between the first and the second transporting element (4, 9) is a transporting element which can be driven to rotate about a vertical machine axis, for example in the form of a transport star, and wherein the third transporting element (6 - 8) comprises at least in the at least two transport levels (TE1, TE2) puck receptacles (13) distributed about its machine axis at equal angular distances or at an equal pitch distance.

9. The transporting system of any one of the preceding claims, wherein two transfer regions (19, 20; 21, 22) which succeed one another in the direction of rotation of the first and second transporting element (4, 9) are formed between the packaging-media inlet (3) and packaging-media outlet (10) or between the first and the third transporting element (4, 6) and/or between the second and the third transporting element (9, 8), with one transfer region (19, 22) in the one, for example lower, transport level (TE1) and one transfer region (20, 21) in the other, for example upper, transport level (TE2).

10. The transporting system of any one of the preceding claims, **characterised by** controlling and lifting means of the first and second transporting element (4, 9) for moving the puck receptacles (17) between the transport levels (TE1, TE2).

11. The transporting system of any one of the preceding claims, wherein the puck receptacles (17) of the first and of the second transporting element (4, 9) as well as the puck receptacles (13) of the at least one third transporting element (6 - 8) each have the same pitch distance.

12. The transporting system of any one of the preceding claims, wherein the puck receptacles (13) of the at least one third transporting element (6 - 8) in the one transport level (TE1) are part of the partial length (12.1) of the packaging media transport path (5) which runs in that one level, and the puck receptacles (13) in the other transport level (TE2) are part of the partial length (12.2) of the puck transport path (12) which runs in that other level.

13. The transporting system of any one of the preceding claims **characterised in that** it is part of an apparatus for handling the packaging media (2), and more particularly having at least one handling station which is provided on the packaging media transporting route (5) between the packaging-media inlet (3) and packaging-media outlet (10) and which takes the form, for example, of at least one handling station which applies a decoration, such as, for example, an imprint, to the packaging media (2).

14. Apparatus for handling packaging media, in particular for the furnishing and/or printing of packaging media (2), comprising a transporting system (1) transporting the packaging media (2) along a packaging media transporting route (5) from a packaging-media inlet (3) to a packaging-media outlet (10), with treatment stations, such as, for example, printing stations, being provided on the transporting route (5), wherein the transporting system (1) is configured according to any one of the preceding claims.

## Revendications

1. Système de transport pour le transport de moyens d'emballage (2) d'une entrée de moyens d'emballage (3) à une sortie de moyens d'emballage (10) avec plusieurs éléments de transport (4, 6 - 8, 9) entraînables en rotation qui se raccordent les uns aux autres dans un sens de transport des moyens d'emballage (2) et forment une voie de transport de moyens d'emballage (5) entre l'entrée de moyens d'emballage (3) et la sortie de moyens d'emballage (10), la voie de transport de moyens d'emballage (5) étant une longueur partielle d'une course de transport fermée en soi (12) pour une pluralité d'unités de retenue et de centrage de moyens d'emballage ou palets (11), qui sont réalisés pour une préhension respectivement d'un moyen d'emballage (2) sur l'entrée de moyens d'emballage (3) et pour un entraînement du moyen d'emballage respectif (2) le long de la voie de transport de moyens d'emballage (5) jusqu'à la sortie de moyens d'emballage (10), ainsi qu'avec une voie de transport de retour de palet formant une autre longueur partielle (12.2) de la course de transport (12) pour le retour des palets (11) après la libération du moyen d'emballage respectif (2) de la sortie de moyens d'emballage (10) à l'entrée de moyens d'emballage (1), **caractérisé en ce que**
la longueur partielle (12.1) formant la voie de transport de moyens d'emballage (5) de la course de transport de palet (12) et la longueur partielle (12.2) formant la voie de transport de retour de palet de la course de transport de palet (12) sont prévues dans différents plans de transport (TE1, TE2) décalés dans le sens vertical l'un contre l'autre et **en ce que** la voie de transport de moyens d'emballage (5) et la voie de transport de retour de palet sont formées par des éléments de transport communs (4, 6 - 8, 9).

2. Système de transport selon la revendication 1, **caractérisé en ce que** la voie de transport de moyens d'emballage (5) et la voie de transport de retour de palet sont formées exclusivement par des éléments de transport communs (4, 6 - 8, 9).

3. Système de transport selon la revendication 1 ou 2, **caractérisé en ce que** la longueur partielle formant la voie de transport de moyens d'emballage (5) de la course de transport de palet (12) s'étend sous la longueur partielle (12.2) formant la voie de transport de retour de palet ou dans le plan de transport TE1 inférieur.

4. Système de transport selon l'une quelconque des revendications précédentes, **caractérisé en ce que** les éléments de transport (4, 6 - 8, 9) présentent des logements de palet (13, 17) avec des moyens de réception, de retenue ainsi que de transfert des palets (11) de et à des éléments de transport contigus (4, 6 - 8, 9).

5. Système de transport selon l'une quelconque des revendications précédentes, **caractérisé par** un premier élément de transport (4) dans la zone de l'entrée de moyens d'emballage pour le retour des palets (1) du plan de transport (TE2) correspondant à la voie de transport de retour de palet dans le plan de transport (TE1) correspondant à la voie de transport de moyens d'emballage (5) ainsi que par un deuxième élément de transport (9) sur la sortie de moyens d'emballage (10) pour le transfert des palets (11) du plan de transport (TE1) correspondant à la voie de transport de moyens d'emballage dans le plan de transport (TE2) correspondant à la voie de transport de retour de palet.

6. Système de transport selon la revendication 5, **caractérisé en ce qu'**au moins un troisième élément de transport (6 - 8), de préférence au moins deux troisièmes éléments de transport (6 - 8) sont prévus entre le premier et deuxième élément de transport (4, 9).

7. Système de transport selon la revendication 5 ou 6, **caractérisé en ce que** le premier élément de transport prévu sur l'entrée de moyens d'emballage (3) et/ou le deuxième élément de transport prévu sur la sortie de moyens d'emballage (10) est réalisé sous forme d'étoile d'entrée (4, 9) avec plusieurs logements de palet (17) qui sont prévus à une distance d'écartement sur la périphérie d'un rotor (16) entraînable en rotation autour d'un axe de machine vertical et peuvent être déplacés de manière commandée et synchrone avec le mouvement de rotation du rotor (16) parallèlement à l'axe de machine entre au moins un plan de transport inférieur et un plan de transport supérieur (TE1, TE2).

8. Système de transport selon l'une quelconque des revendications 6 ou 7, **caractérisé en ce que** l'au moins un troisième élément de transport (6 - 8) agencé entre le premier et le deuxième élément de transport (4, 9) est un élément de transport entraînable en rotation autour d'un axe de machine vertical par exemple sous forme d'étoile de transport, et **en ce que** le troisième élément de transport (6 - 8) présente les logements de palet (13) répartis au moins dans les au moins deux plans de transport (TE1, TE2) autour de son axe de machine dans des distances angulaires régulières ou à une distance d'écartement identique.

9. Système de transport selon l'une quelconque des revendications précédentes, **caractérisé en ce que** respectivement deux zones de remise (19, 20 ; 21, 22) se suivant dans le sens périphérique du premier et deuxième élément de transport (4, 9) sont formées entre l'entrée de moyens d'emballage (3) et la sortie de moyens d'emballage (10) ou le premier et le troisième élément de transport (4, 6) et/ou entre le deuxième et le troisième élément de transport (9, 8), c'est-à-dire une zone de remise (19, 22) dans l'un plan de transport, par exemple inférieur (TE1) et une zone de remise (20, 21) dans l'autre plan de transport, par exemple supérieur (TE2).

10. Système de transport selon l'une quelconque des revendications précédentes, **caractérisé par** des moyens de commande et de levage du premier et deuxième élément de transport (4, 9) pour le mouvement des logements de palet (17) entre les plans de transport (TE1, TE2).

11. Système de transport selon l'une quelconque des revendications précédentes, **caractérisé en ce que** les logements de palet (17) du premier et deuxième élément de transport (4, 9) ainsi que les logements de palet (13) de l'au moins un troisième élément de transport (6 - 8) présentent respectivement la même distance d'écartement.

12. Système de transport selon l'une quelconque des revendications précédentes, **caractérisé en ce que** les logements de palet (13) de l'au moins un troisième élément de transport (6 - 8) dans l'un plan de transport (TE1) sont des constituants de la longueur partielle s'étendant là-bas (12.1) de la course de transport de moyens d'emballage (5) et les logements de palet (13) dans l'autre plan de transport (TE2) sont des constituants de la longueur partielle (12.2) s'étendant là-bas de la course de transport de palet (12).

13. Système de transport selon l'une quelconque des revendications précédentes, **caractérisé en ce qu'**il est un constituant d'un dispositif de traitement des moyens d'emballage (2), c'est-à-dire avec au moins un poste de traitement prévu entre l'entrée de moyens d'emballage (3) et la sortie de moyens d'emballage (10) sur la voie de transport de moyens d'emballage (5), par exemple sous la forme d'au moins un poste de traitement pourvoyant les moyens d'emballage (2) d'un équipement, par exemple d'une impression.

14. Dispositif de traitement de moyens d'emballage, en particulier d'équipement et/ou d'impression de moyens d'emballage (2) avec un système de transport (1) transportant les moyens d'emballage (2) d'une entrée de moyens d'emballage (3) à une sortie de moyens d'emballage (10) le long d'une voie de transport de moyens d'emballage (5), des postes de traitement, par exemple des postes d'impression étant prévus sur la voie de transport (5), **caractérisé en ce que** le système de transport (1) est réalisé selon l'une quelconque des revendications précédentes.
